(19) **Europäisches Patentamt / European Patent Office / Office européen des brevets**

(11) **EP 1 428 712 B1**

(12) **FASCICULE DE BREVET EUROPEEN**

(45) Date de publication et mention de la délivrance du brevet:
**08.10.2008 Bulletin 2008/41**

(51) Int Cl.:
*B60K 6/46* (2007.10)  *B60L 11/12* (2006.01)
*B60W 20/00* (2006.01)  *F02D 41/02* (2006.01)

(21) Numéro de dépôt: **03026424.6**

(22) Date de dépôt: **19.11.2003**

(54) **Chaîne de traction et procedé de réglage pour véhicule hybride série**

Serieller Hybridantriebsstrang und Steuerungsverfahren dafür

Drivetrain and control method for series hybrid vehicle

(84) Etats contractants désignés:
**AT BE BG CH CY CZ DE DK EE ES FI FR GB GR HU IE IT LI LU MC NL PT RO SE SI SK TR**

(30) Priorité: **11.12.2002 FR 0215878**

(43) Date de publication de la demande:
**16.06.2004 Bulletin 2004/25**

(73) Titulaire: **Conception et Développement Michelin S.A.**
**1762 Givisiez (CH)**

(72) Inventeurs:
• **Auguet, Thierry**
**1608 Chapelle Glane (CH)**
• **Linda, Jean-Louis**
**1635 La Tour-de-Treme (CH)**
• **Varenne, Pierre**
**1740 Neyruz (CH)**

(74) Mandataire: **Bauvir, Jacques**
**Michelin & Cie**
**Service SGD/LG/PI**
**C.E.R. Ladoux - F35**
**63040 Clermont-Ferrand Cedex 09 (FR)**

(56) Documents cités:
**EP-A- 0 556 942       EP-A- 0 901 930**
**EP-A- 1 013 498       EP-A- 1 199 205**
**EP-A- 1 241 043       US-A- 5 545 928**
**US-A- 5 927 416**

**EP 1 428 712 B1**

**Description**

La présente invention concerne les véhicules automobiles routiers, à motorisation hybride série. Dans les véhicules de ce type, un moteur thermique entraîne un alternateur électrique qui transforme l'énergie mécanique disponible à l'arbre du moteur thermique en énergie électrique. Cette énergie électrique alimente un ou des moteurs électriques de traction, reliés mécaniquement aux roues motrices du véhicule. Le moteur thermique n'est pas relié mécaniquement aux roues, contrairement aux véhicules à motorisation hybride parallèle, dans lesquels un moteur thermique et un moteur électrique sont tous les deux reliés mécaniquement aux roues motrices, les couples qu'ils délivrent pouvant s'additionner pour entraîner les roues motrices.

Les conducteurs de véhicules automobiles à motorisation classique (par l'expression « motorisation classique », on vise ici un moteur thermique et une boîte de vitesse, mécanique ou automatique) sont familiarisés avec les commandes d'accélération et de freinage bien connues dans l'état de la technique. Ces commandes ont atteint un haut degré de progressivité et de réactivité. Il est souhaitable qu'un véhicule hybride puisse se conduire sensiblement de la même façon si l'on veut ne pas dérouter un conducteur habitué aux motorisations classiques. Il s'agit donc de pouvoir transformer les actions d'un conducteur sur la pédale d'accélérateur (et éventuellement de frein), en actions judicieuses sur la régulation de la chaîne de traction partant du moteur thermique et aboutissant à un ou des moteurs électriques de traction.

Il est bien connu d'installer une batterie d'accumulateurs électriques en tampon entre l'alternateur et le moteur électrique, notamment dans le cas où l'on souhaite pouvoir entraîner le véhicule en mode électrique pur, moteur thermique coupé. Dans ce cas, les régulations du moteur thermique et du moteur électrique de traction peuvent être indépendantes. Il n'y a pas de problème particulier à piloter le couple d'un moteur électrique, qui puise son énergie dans une batterie d'accumulateurs électriques, avec toute la progressivité et la réactivité voulues à la pédale d'accélérateur à disposition du conducteur.

Mais l'utilisation d'une batterie d'accumulateurs électriques pose différents problèmes. Une telle batterie a une masse élevée au regard de la quantité d'énergie électrique stockée. Cela augmente considérablement la masse d'un véhicule et est source de gaspillage lors des accélérations, sans parler des problèmes de comportement dynamique d'un véhicule, d'autant plus cruciaux que le véhicule est lourd. En outre, de telles batteries posent des problèmes d'entretien et des problèmes pour l'environnement en raison des nombreuses matières polluantes et difficiles à recycler qu'elles contiennent.

Le but de la présente invention est donc de concevoir une chaîne de traction hybride série qui puisse éventuellement fonctionner sans batterie d'accumulateurs électriques, tout en offrant au conducteur du véhicule une commande d'accélérateur très progressive et très réactive. Dans le cas où l'on ne dispose pas d'un réservoir d'énergie électrique (batterie), il est nécessaire d'être capable de produire l'énergie électrique juste nécessaire à la demande. Le problème qui se pose est donc d'obtenir le couple voulu au moteur électrique de traction tout en évitant le calage ou l'emballement du moteur thermique, et ceci au moyen d'une commande dont la progressivité et la réactivité soient aussi proches que possible de celles d'une pédale d'accélérateur de véhicule à motorisation classique.

Dans la demande de brevet EP 1 241 043, on a décrit une chaîne de traction pour véhicule hybride série dans laquelle la demande du conducteur, lorsqu'il enfonce la pédale d'accélérateur, entraîne un ordre d'ouverture papillon pour le moteur thermique. Le régime du moteur thermique est une conséquence du pilotage du couple du ou des moteurs électriques de traction, régime sur lequel le principe antérieurement proposé n'a pas d'action directe. Le couple du ou des moteurs de traction est piloté en fonction de la vitesse du véhicule et en fonction d'une puissance de pilotage P évaluant la puissance disponible à l'arbre de sortie du moteur thermique au régime réel du moteur thermique. Le régime du moteur thermique ne correspond pas nécessairement à l'optimum de consommation, malgré une tendance décrite dans la demande de brevet précitée à évoluer progressivement vers des régimes de moindre consommation.

Dans le document générique EP 556942 A, le couple de consigne de l'alternateur est fonction de l'erreur du régime du moteur thermique par rapport au régime de consigne.

Pour pouvoir aller rapidement et de façon plus déterministe vers un optimum de fonctionnement d'un moteur thermique donné, notamment vers un optimum de consommation d'un moteur thermique donné, il faudrait pouvoir maîtriser, pour toute sollicitation du conducteur, à la fois une ouverture papillon déterminée et un régime de rotation du moteur thermique choisi.

L'invention propose une chaîne de traction pour véhicule hybride série comportant :

- un moteur thermique entraînant un alternateur,
- au moins un moteur électrique de traction connecté à l'alternateur par un redresseur, par une ligne électrique et un onduleur, l'onduleur permettant de faire fonctionner le ou les moteurs électriques de traction à un couple de consigne $CC_{consigne}$, la ligne électrique permettant le transfert d'une puissance électrique de traction,
- un accélérateur à disposition du conducteur du véhicule ;
- un actionneur agissant sur le moteur thermique ;

- une unité de pilotage de la chaîne de traction chargée d'une modélisation du fonctionnement du moteur thermique et chargée d'un programme permettant d'obtenir, à partir de la position de l'accélérateur, une paire ($R_{th/consigne}$, $PP_{consigne}$) de valeurs de consigne pour le régime $R_{th}$ de rotation du moteur thermique et pour la position PP de l'actionneur, ladite unité de pilotage permettant de :

  • piloter la position dudit actionneur sur la base de ladite valeur de consigne $PP_{consigne}$ pour la position de l'actionneur,
  • par un calcul itératif, à chaque itération, calculer un couplé de consigne $CC_{consigne}$ pour le ou les moteurs électriques de traction en fonction de l'écart entre le régime mesuré $R_{th}$ et la valeur de consigne $R_{th/consigne}$ pour le régime de rotation du moteur thermique de façon à respecter ledit régime de consigne $R_{th/consigne}$.

Soulignons immédiatement que, selon un aspect de la présente invention, la commande d'accélérateur à disposition du conducteur agit sur le couple de consigne du ou des moteurs électrique de traction de façon à absorber plus ou moins de puissance afin de, grâce à un régulateur de régime, respecter le régime de rotation choisi. En outre, la commande d'accélérateur agit sur l'actionneur agissant sur le moteur thermique (un papillon sur l'admission d'air pour un moteur à essence). Les deux actions sont indirectes, au sens où elles résultent d'un calcul qui sera explicité ci-dessous.

Bien entendu, dans la mesure où l'on dispose d'énergie électrique sur la ligne électrique évoquée, on peut envisager de brancher différentes charges électriques autres que le ou les moteurs électriques de traction. Dans certains cas, ne fût-ce qu'en phase transitoire, ces autres charges électriques peuvent absorber une puissance électrique importante, parfois plus importante que le ou les moteurs électrique de traction, voire plus importante que la puissance disponible. Notamment (mais pas uniquement) dans le cas où l'une ou l'autre de ces charges seraient susceptibles d'avoir une demande de puissance importante alors que la traction du véhicule ne demande aucune puissance, il peut s'avérer souhaitable d'apporter différentes adaptations, perfectionnements et/ou correctifs au principe de régulation expliqué ci-dessus, ce que l'on abordera dans la suite.

L'invention sera mieux comprise au moyen de la description plus complète d'un exemple non limitatif, en se référant aux figures jointes sur lesquelles

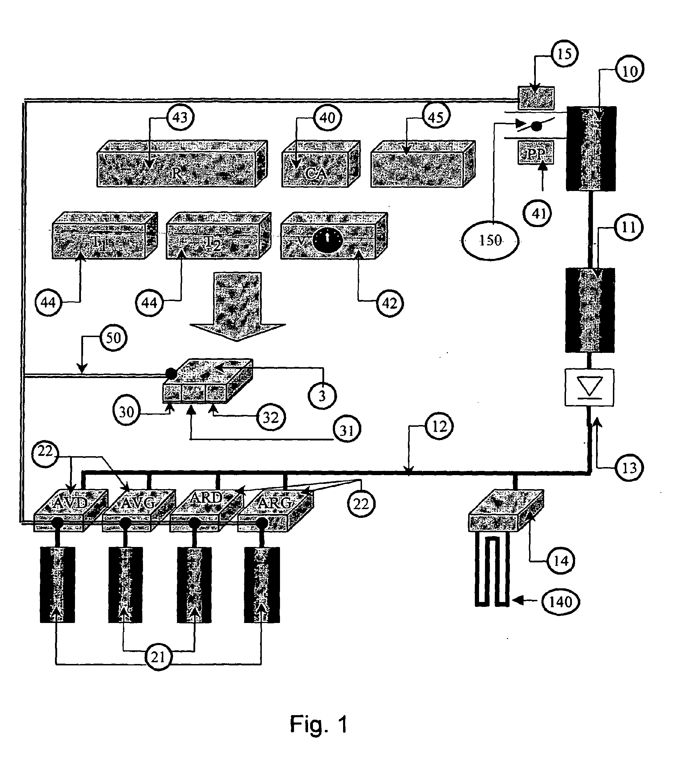

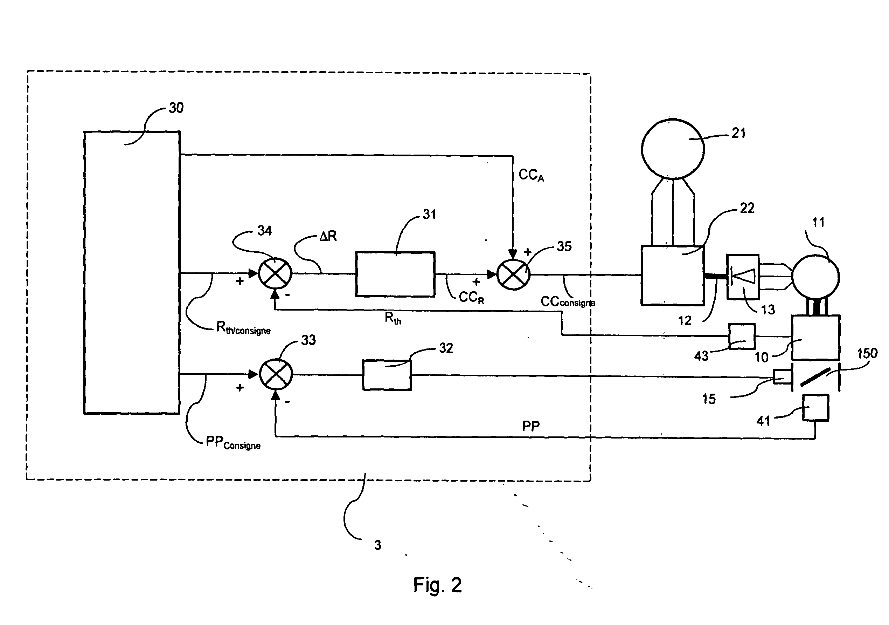

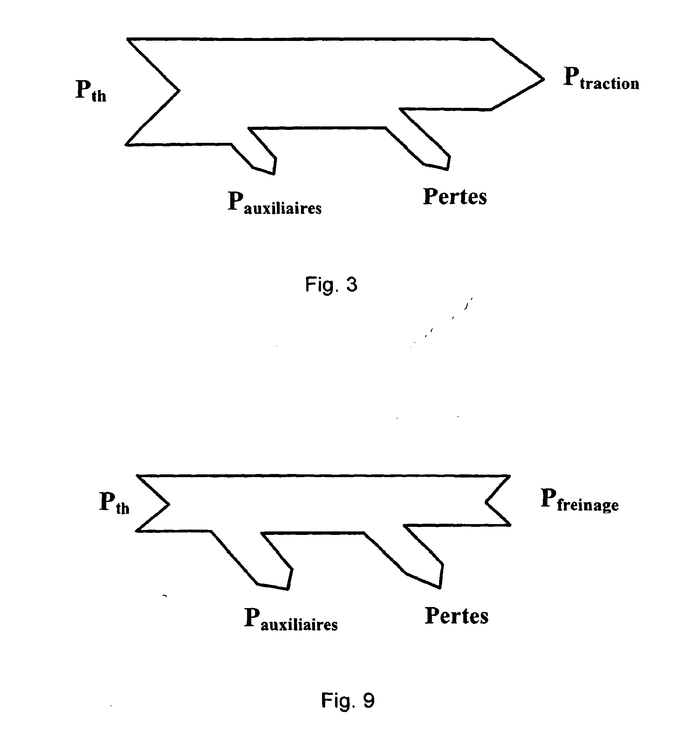

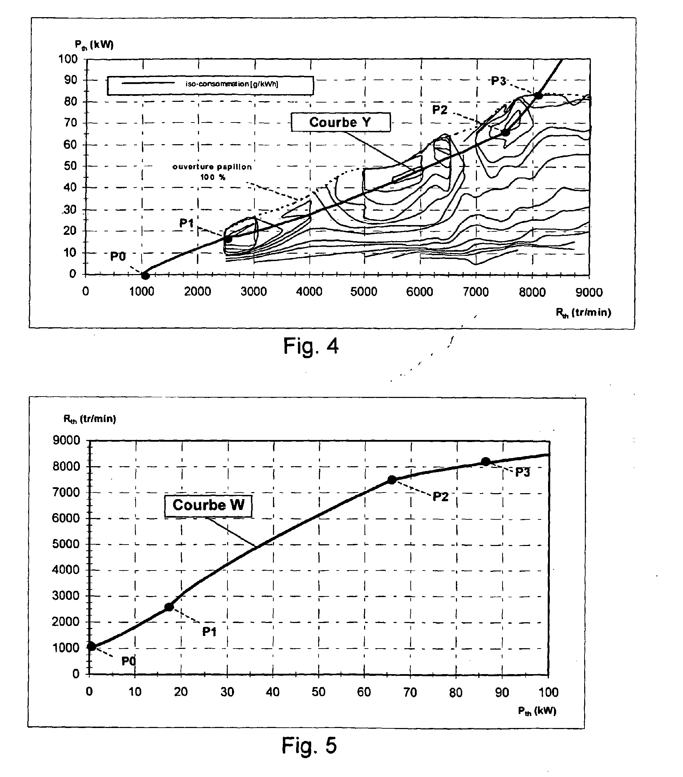

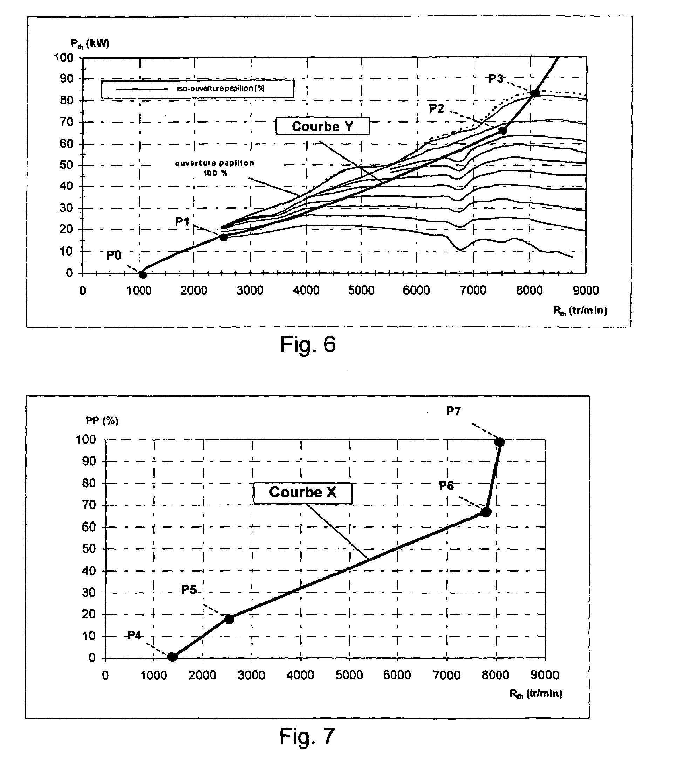

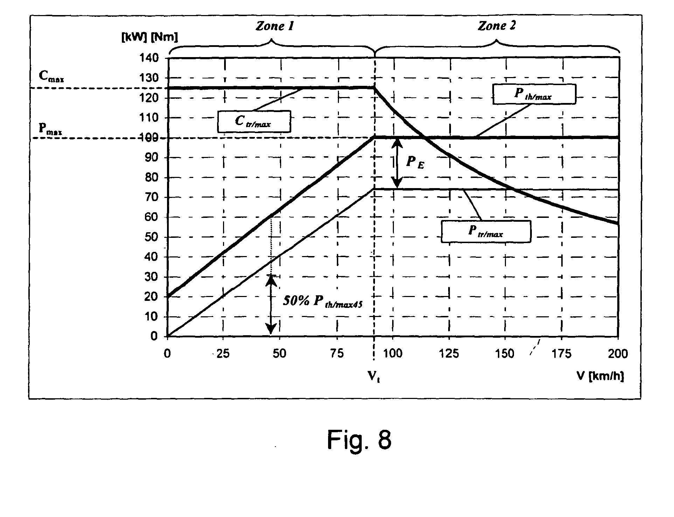

  ■ la figure 1 est une représentation schématique générale d'une chaîne de traction pour véhicule hybride série selon l'invention ;
  ■ la figure 2 est un schéma bloc décrivant le fonctionnement de l'invention ;
  ■ les figures 3 et 9 schématisent le bilan des puissances en jeu ;
  ■ la figure 4 est une cartographie des iso-consommations du moteur thermique tracée dans un repère donnant la puissance du moteur thermique (axe des ordonnées), en fonction de son régime de rotation (axe des abscisses), cartographie sur laquelle on a superposé une courbe de pilotage Y ;
  ■ la figure 5 est la courbe W, fonction réciproque de la courbe Y, tracée dans un repère donnant le régime de rotation du moteur thermique (axe des ordonnées) en fonction de sa puissance (axe des abscisses) ;
  ■ La figure 6 est une cartographie des iso-ouvertures papillon du moteur thermique tracée dans un repère donnant la puissance du moteur thermique (axe des ordonnées) en fonction de son régime de rotation (axe des abscisses), cartographie sur laquelle on a superposé la courbe de pilotage Y décrite à la figure 4 ;
  ■ la figure 7 est une courbe de pilotage X de la position d'un papillon agissant sur le moteur thermique, en fonction du régime de rotation dudit moteur thermique ;
  ■ la figure 8 montre une courbe représentative de la puissance thermique maximale à développer par le moteur thermique en fonction de la vitesse de déplacement du véhicule, et une courbe représentative du couple maximal correspondant à développer par le ou les moteurs électriques de traction, en fonction de la vitesse de déplacement du véhicule.

A la figure 1, on voit un moteur thermique à essence 10, et un actionneur 15 du moteur thermique contrôlant la position PP d'un papillon 150 dans une tubulure d'admission d'air, pour agir sur la puissance développée par le moteur thermique 10. Le moteur thermique entraîne un alternateur 11. L'énergie électrique fournie par ce dernier est distribuée vers quatre moteurs électriques de traction 21, via un redresseur 13, une ligne électrique 12, et un onduleur 22 par moteur 21. Un dispositif d'absorption 14 d'énergie électrique est connecté à la ligne électrique 12. La chaîne de traction est gérée par une unité de pilotage 3 du couple de traction et de la position papillon.

Bien entendu, à l'égard de la présente invention, le nombre de moteurs électriques de traction importe peu. Il peut y avoir un seul moteur, ou plusieurs, par exemple un par roue du véhicule. S'il y a plusieurs moteurs électriques de traction, il faut comprendre par « couple de consigne $CC_{consigne}$ » un couple global cumulé pour tous les moteurs, la présente invention ne concernant pas la question de la répartition du couple entre les moteurs. Quant au type de moteur électrique, il s'agit d'un moteur dont on peut piloter le couple délivré à l'arbre, en amplitude et en signe. C'est par exemple une machine synchrone auto pilotée, à concentration de flux, à inducteur à aimants permanents.

Dans l'exemple décrit en détail, les moteurs électriques de traction 21 sont des moteurs synchrones triphasés, équipés d'un capteur de position angulaire de type résolveur et sont pilotés par les onduleurs 22, sous le contrôle de l'unité de pilotage 3. L'électronique est conçue pour piloter les moteurs en couple. De ce fait l'ensemble de traction peut être utilisé en moteur et en frein.

L'alternateur utilisé est par exemple une machine électrique du même type que celle proposée pour le moteur électrique de traction. L'alternateur transforme l'énergie mécanique disponible à l'arbre de sortie du moteur thermique en énergie électrique consommée par la charge électrique connectée à la ligne électrique sur laquelle ledit alternateur débite (pour cet exposé, la charge électrique est principalement le ou les moteurs électriques de traction).

L'unité de pilotage 3, via un bloc de calcul 30 reçoit des signaux d'évaluation de différents paramètres comme un potentiomètre 40 reflétant la position d'une commande d'accélérateur CA (une pédale ou autre commande équivalente à disposition du conducteur du véhicule), comme un capteur 41 reflétant la position du papillon PP, un capteur 42 donnant la vitesse V du véhicule, un capteur 43 donnant le régime $R_{th}$ du moteur thermique, différents capteurs de température 44, un capteur 45 donnant la pression du circuit hydraulique de freinage du véhicule, la liste étant non exhaustive. Un module de contrôle 32 de l'actionneur 15 du moteur thermique asservit la position de l'actionneur, c'est à dire la position du papillon 150. L'actionneur 15 est constitué essentiellement par un petit moteur électrique à courant continu, accouplé au papillon des gaz du moteur thermique. Ce moteur est géré par une électronique appropriée et, grâce à un capteur de position 41 (potentiomètre), le papillon est asservi en permanence en position. Un régulateur de régime 31 du moteur thermique détermine un couple de consigne pour le ou les moteurs électriques 21. Le bloc de calcul 30, le régulateur de régime 31 et le module de contrôle 32 effectuent les calculs nécessaires selon une période d'échantillonnage choisie.

Un bus CAN® 50 (Controller Area Network) assure la communication entre les différents organes. Ceci permet à l'unité de pilotage 3, de recevoir notamment la vitesse de la roue entraînée par le ou les moteurs électriques 21 et un diagnostic sur le fonctionnement en provenance des onduleurs 22, et d'émettre un couple de consigne $CC_{consigne}$ à destination des onduleurs 22.

Dans un véhicule réel, d'autres organes périphériques absorbent de la puissance délivrée par le moteur thermique. En ce qui concerne la présente invention, il importe peu qu'ils prélèvent une puissance mécanique directement au vilebrequin du moteur thermique ou qu'ils prélèvent une puissance électrique sur la ligne électrique 12 car cela revient à prélever ladite puissance au vilebrequin via l'alternateur. Indiquons simplement que certains de ces organes périphériques peuvent aussi être gérés par l'unité de pilotage 3, ce qui présente l'intérêt de pouvoir tenir compte dans le bloc de calcul 30 des variations de puissance consommées pour calculer une position de l'actionneur 15 avant même que le régime du moteur thermique ait pu s'en trouver modifié.

Venons en à la description de la gestion du fonctionnement de la chaîne de traction. Le potentiomètre 40 donnant la position de la pédale d'accélérateur délivre un signal qui permet de réaliser les trois fonctions suivantes : accélération normale, accélération maximale possible (comparable à la position dite « kick-down » dans les véhicules classiques à boîte de vitesses automatique), et frein moteur. On laisse de côté pour le moment le fonctionnement en frein moteur.

Expliquons maintenant comment on peut créer une modélisation du fonctionnement du moteur thermique qui va servir de base aux calculs effectués par le bloc de calcul 30.

La figure 4 montre, pour un moteur thermique particulier, le diagramme de puissance réelle mesurée expérimentalement, en fonction du régime, pour différentes valeurs d'iso-consommation spécifiques. Les courbes à iso consommation spécifique identifient des réseaux de courbes donnant la puissance délivrée en fonction d'un régime de rotation où le rendement du moteur thermique est constant, c'est à dire où la consommation par unité de puissance délivrée est constante. C'est un exemple de ce que l'on désigne couramment par la cartographie d'un moteur thermique. On repère des points P1, P2, P3 de moindre consommation pour une puissance délivrée donnée. P3 est le point particulier correspondant à la puissance maximale du moteur thermique.

On repère aussi un point P0 permettant le fonctionnement à un régime de ralenti. On peut construire une courbe de pilotage qui relie sensiblement P0 et tous ces points de « moindre consommation pour une puissance thermique donnée ». Un exemple particulier parmi d'autres est donné par la courbe Y à la figure 4. A la figure 5, la courbe W, fonction réciproque de la courbe Y, établit la correspondance entre la consigne de régime de « moindre consommation » (axe des ordonnées) et la consigne de puissance thermique du moteur (axe des abscisses). A la courbe de la figure 5, on a gardé les mêmes notations pour les points P0, P1, P2 et P3 puisqu'il s'agit d'une simple permutation entre les abscisses et les ordonnées. Cette courbe W peut être modélisée dans le bloc de calcul 30 par une première équation. L'expression de cette équation entre les points P0 et P1 est :

$$ R_{th/consigne} = (R_{th1} - R_{th0}) . \frac{(P_{th/consigne} - P_{th0})^n}{(P_{th1} - P_{th0})^n} + R_{th0} $$

avec $(P_{th0}, R_{th0})$ et $(P_{th1}, R_{th1})$ : coordonnées respectives des points P0 et P1,
et n : coefficient permettant de régler la concavité de la courbe.

De la même façon, on peut facilement écrire les expressions de cette première équation entre les points P1 et P2 puis entre les points P2 et P3.

La figure 6 montre le diagramme de puissance réelle mesurée expérimentalement, en fonction du régime, pour différentes ouvertures papillon. On a tracé sur la figure 6 la courbe de pilotage Y décrite à la figure 4.

La figure 7 quant à elle est une modélisation de l'intersection de la courbe de pilotage Y à la figure 6 avec les courbes d'iso-ouverture de papillon. Cette modélisation est la courbe X, qui établit la correspondance entre la consigne d'ouverture du papillon et la consigne de régime de « moindre consommation ». Cette courbe X est une deuxième équation, obtenue par une linéarisation par parties entre les points singuliers P4, P5, P6 et P7. Ceux-ci sont judicieusement choisis pour que la modélisation soit aussi fidèle que possible à la réalité, ici selon une préoccupation de moindre consommation. La modélisation (courbe X) chargée dans le bloc de calcul 30 est la deuxième équation. L'expression de cette équation entre les points P4 et P5 est :

$$PP_{consigne} \quad = \quad (PP_5 - PP_4).\frac{(R_{th/consigne} - R_{th4})}{(R_{th5} - R_{th4})} \quad + \quad PP_4$$

avec $(R_{th4}, PP_4)$ et $(R_{th5}, PP_5)$ : coordonnées respectives des points P4 et P5.

De la même façon, on peut facilement écrire les expressions de cette deuxième équation entre les points P5 et P6 puis entre les points P6 et P7.

De façon équivalente, les modélisations exprimées par les première et deuxième équations indiquées ci-dessus auraient aussi pu être introduites dans le bloc de calcul 30 par tableaux de points.

Grâce à ces courbes de pilotage, on a construit une modélisation particulière permettant de piloter le moteur thermique, selon une préoccupation particulière qui est ici d'obtenir une moindre consommation spécifique.

Ainsi, dans une mise en oeuvre particulière mais avantageuse de l'invention, la chaîne de traction est telle que ladite modélisation comporte au moins une première équation (ou un tableau de points ou plus généralement une courbe) donnant le régime $R_{th}$ en fonction de la puissance thermique $P_{th}$ disponible à l'arbre de sortie du moteur thermique et au moins une deuxième équation (ou un tableau de points ou plus généralement une courbe) donnant la position PP de l'actionneur en fonction du régime $R_{th}$, ledit programme permettant de traduire la position effective de l'accélérateur CA en consigne de puissance thermique $P_{th/consigne}$ puis de traduire la consigne de puissance thermique $P_{th/consigne}$ en consigne de régime $R_{th/consigne}$, puis de traduire la consigne de régime en consigne de position d'actionneur $PP_{consigne}$.

En variante, on pourrait traduire directement la consigne de puissance thermique $P_{th/consigne}$ en consigne de position d'actionneur $PP_{consigne}$. Dans une autre variante encore, ladite modélisation pourrait d'abord traduire la consigne de puissance thermique $P_{th/consigne}$ en consigne de position d'actionneur $PP_{consigne}$, puis traduire la consigne de position d'actionneur $PP_{consigne}$ en consigne de régime $R_{th/consigne}$.

Dans le contexte de la présente invention, utiliser dans la modélisation une équation ou un tableau de points ou une courbe descriptive sont des solutions équivalentes entre lesquelles l'homme du métier choisira dans chaque cas d'espèce. Ceci étant clairement établi, on ne reviendra plus dans la suite sur ces équivalences.

On a vu que lesdites première et deuxième équations sont toutes deux représentatives d'un fonctionnement du moteur thermique à consommation spécifique minimale de carburant. Ceci n'est bien entendu qu'un cas particulier. En variante, on pourrait construire une modélisation dans laquelle lesdites première et deuxième équations sont toutes deux représentatives d'un fonctionnement du moteur thermique à moindre émission de polluants. Ou encore, on peut chercher à minimiser le bruit du véhicule, ou encore l'usure du moteur thermique. On peut chercher à maximiser les performances du véhicule. En outre, on peut changer de modélisation de façon dynamique, soit automatiquement par exemple selon l'endroit où se trouve le véhicule (ce que le bloc de calcul 30 peut savoir grâce à un système GPS), soit manuellement.

Examinons maintenant comment on exploite cette modélisation pour piloter la chaîne de traction de l'invention. Par les courbes W à la figure 5 et X à la figure 7 et/ou les équations équivalentes correspondantes, et à partir d'un besoin de puissance dont on verra plus loin comment on peut l'estimer sur la base de la position de l'accélérateur, on peut calculer un point de fonctionnement du moteur thermique, défini par une paire (optimale selon le critère retenu pour la construction de la modélisation) de valeurs pour le régime moteur et pour la position papillon. On pilote directement la position du papillon et on stabilise le moteur thermique à ce régime en pilotant le couple du ou des moteurs électriques de traction pour que la totalité de la puissance électrique consommée équilibre la puissance thermique disponible à ce régime judicieusement choisi.

La figure 3 illustre schématiquement les puissances en jeu. La puissance délivrée par le moteur thermique (entrée gauche du schéma) est absorbée par tous les consommateurs branchés sur la ligne électrique (accessoires ou même organes essentiels comme une direction électrique ou une suspension électrique) et les périphériques du moteur thermique, l'ensemble de ces consommateurs étant dénommés « auxiliaires », par les pertes dans les différents organes, et par la traction électrique, celle-ci étant ajustée en permanence de façon à équilibrer la puissance délivrée par le moteur thermique.

On voit à la figure 2 que le bloc de calcul 30 envoie sur une entrée positive d'un sommateur 33 la consigne de position $PP_{consigne}$ de l'actionneur 15, consigne par ailleurs déterminée comme expliqué ci-dessus. Le sommateur 33 reçoit sur une entrée négative une mesure de la position réelle PP de l'actionneur, via le capteur 41. Le module de contrôle 32 de l'actionneur asservit la position du papillon de façon à ce qu'elle respecte la valeur calculée par le bloc de calcul 30.

On voit aussi à la figure 2 que le bloc de calcul 30 envoie sur une entrée positive d'un sommateur 34 la consigne de régime $R_{th/consigne}$ par ailleurs déterminée comme expliqué ci-dessus. Le sommateur 34 reçoit sur une entrée négative une mesure du régime $R_{th}$ réel de rotation du moteur thermique 10 via le capteur 43. Le régulateur de régime 31 reçoit un signal image de l'écart entre la consigne de régime $R_{th/consigne}$ et le régime $R_{th}$ réel de rotation du moteur thermique 10, et détermine à partir de cet écart une valeur de correction $CC_R$ pour le couple de consigne $CC_{consigne}$ du ou des moteurs électriques. Tout écart entre le régime réel et la consigne de régime (ici, pour être dans une situation de moindre consommation) fait l'objet d'une correction en ajustant le couple du ou des moteurs électriques de traction. Si le régime de rotation réel est supérieur au régime de consigne, il convient de charger plus le moteur thermique, ce que l'on fait en augmentant le couple de traction au ou aux moteurs électriques 21, et inversement. A chaque itération de calcul, le couple de consigne $CC_{consigne}$ est modifié dans le sens précisé ci-dessus jusqu'à ce que le régime de consigne soit respecté, puis le couple de consigne $CC_{consigne}$ est maintenu à la valeur atteinte.

Insistons sur le fait que la modélisation exposée ci-dessus, et représentée par les courbes W à la figure 5 et X à la figure 7 (et/ou les équations 1 et 2, ou un tableau de points ou plus généralement une courbe), n'a rien d'impératif. De nombreuses autres courbes et/ou équations pourraient permettre de faire fonctionner le moteur thermique, notamment en fonction de préoccupations autres que la moindre consommation ou par des courbes plus simples à mettre en équations et ayant un caractère plus arbitraire.

En appliquant ce principe sans correctif, et en se souvenant que la tension délivrée par l'alternateur couplé au moteur thermique est elle-même en première approximation proportionnelle au régime de l'alternateur, donc du moteur thermique, il est possible que l'on aboutisse à une impossibilité de traction parce que le ou les moteurs électriques de traction ne disposeront pas sur la ligne électrique 12 d'une tension suffisante. Rappelons que la tension minimale nécessaire à un moteur électrique de traction est fonction de sa vitesse, de son couple et de ses caractéristiques électriques intrinsèques. Pour éviter cette situation, on impose un seuil minimal au régime de rotation du moteur thermique, garantissant une tension suffisante pour le ou les moteurs de traction. La chaîne de traction est telle que ledit programme permet de déterminer un seuil dynamique minimal de régime $R_{th/consigne/min}$ pour la valeur de consigne du régime de sorte que la tension délivrée par l'alternateur et le redresseur sur la ligne électrique 12 est supérieure ou égale à la tension minimale d'alimentation du ou des moteurs électriques de traction, ledit seuil dynamique minimal tenant compte de la vitesse du véhicule, du couple de consigne $CC_{consigne}$ et de la consigne de puissance thermique $P_{th/consigne}$. Le principe de régulation du régime par action sur le couple du ou des moteurs électriques reste identique. La consigne de position $PP_{consigne}$ pour l'actionneur 15 est inchangée, et l'on se déplace sur l'une ou l'autre des courbes d'iso ouverture papillon (courbes ayant une large plage sensiblement horizontale) de la figure 6.

On expose maintenant un exemple particulier, non limitatif, de traduction de la position de l'accélérateur CA en consigne de puissance thermique $P_{th/consigne}$, à l'aide de la figure 8.

Une première partie (Zone 1) correspond à une zone de fonctionnement où le facteur limitant est le couple maximal $C_{max}$ dont sont capables le ou les moteurs électriques de traction. Pour rappel, le ou les moteurs électriques utilisés peuvent développer un couple sensiblement constant, proportionnel au courant, dans toute la plage de vitesses de rotation pour laquelle ils sont conçus.

Dans cette zone 1, on ne peut faire fonctionner le moteur thermique à la puissance thermique maximale $P_{max}$ car le ou les moteurs électriques, fonctionnant à vitesse de rotation faible, ne peuvent en absorber toute la puissance, alors qu'ils travaillent à leur couple maximal $C_{max}$. A partir de la vitesse de transition $V_t$, on trouve ensuite une deuxième zone (Zone 2) de fonctionnement où le facteur limitant est la puissance que peut délivrer le moteur thermique. En effet, dans cette zone et compte tenu de leur vitesse de rotation devenue élevée, le ou les moteurs électriques de traction absorbent la puissance thermique maximale $P_{max}$ à un niveau de couple (donc de courant) inférieur à leur couple maximal.

Connaissant le couple maximal $C_{max}$ que peuvent délivrer le ou les moteurs de traction, comme le montre la figure 8, il est donc possible de déduire la puissance de traction maximale en fonction de la vitesse du véhicule (courbe $P_{tr/max}$). La puissance thermique maximale à laquelle on peut faire fonctionner le moteur thermique (courbe $P_{th/max}$) est supérieure à la précédente, la différence résultant d'une estimation des pertes $P_E$.

Dans la zone 1, la puissance thermique maximale correspond à la somme de la puissance de traction utilisable à la vitesse courante du véhicule lorsque le ou les moteurs électriques de traction fonctionnent au couple maximal $C_{max}$, et d'une estimation des pertes totales (alternateur, onduleurs, etc...) pour l'utilisation du couple maximal $C_{max}$ du ou des

moteurs de traction. Lorsque cette puissance est égale à la puissance thermique maximale $P_{max}$, on atteint la vitesse limite pour laquelle il est possible d'utiliser le couple de traction maximal (fin de la zone 1). Ayant atteint la puissance maximale $P_{max}$ du moteur thermique, donc la puissance de traction maximale, le couple de traction maximal est de ce fait limité et recalculé en fonction de la vitesse véhicule (zone 2).

Pour connaître la consigne de puissance $P_{th/consigne}$ qu'il faut faire délivrer au moteur thermique, on traduit, linéairement ou non, la position effective de la commande d'accélérateur CA en pourcentage de puissance maximale possible à la vitesse instantanée du véhicule. Ainsi, par exemple, si le véhicule roule à 45 km/h et que l'accélérateur se trouve à mi-course, la puissance de consigne $P_{th/consigne}$ pour le moteur thermique vaudra 50% de la puissance de pilotage maximale possible $P_{th/max45}$ à 45 km/h. C'est une valeur qui peut être exploitée selon la modélisation exposée plus haut.

Abordons maintenant comment on peut aussi calculer une consigne de couple dit couple anticipé $CC_A$ pour le ou les moteurs électriques de traction. Pour connaître le couple anticipé $CC_A$, on traduit, linéairement ou non, la position effective de la commande d'accélérateur CA en pourcentage du couple maximal possible à la vitesse instantanée du véhicule (voir courbe $C_{tr/max}$ à la figure 8). Ainsi, par exemple, si le véhicule roule à 45 km/h et que l'accélérateur se trouve à mi-course, le couple anticipé vaudra 50% du couple maximal possible à 45 km/h, soit $C_{max}/2$. C'est une valeur qui est envoyée par le bloc de calcul 30 au sommateur 35 (voir figure 2). Ainsi, ladite unité de pilotage 3 comporte un programme permettant de calculer une valeur anticipée $CC_A$ du couple de consigne du ou des moteurs électriques de traction, et de délivrer une consigne de couple $CC_{consigne}$ au ou aux moteurs électriques de traction égale à la somme $CC_{consigne} = CC_A + CC_R$.

L'intérêt de cette anticipation est que l'on converge bien plus vite vers le bon régime de rotation du moteur thermique. Mais cette anticipation n'a rien d'impératif. Si elle n'existe pas, l'erreur de régime du moteur thermique sera telle que la composante $CC_R$ de correction due à cette erreur sera plus importante. La consigne de couple $CC_{consigne}$ sera alors entièrement déterminée par la sortie du régulateur de régime 31.

Bien entendu, la chaîne de traction selon l'invention peut en outre comporter, comme déjà connu en soi, un dispositif susceptible d'absorber de l'énergie électrique, branché sur ladite ligne électrique, comme une résistance électrique 140 permettant de dissiper de l'énergie. Ce dispositif peut en variante et/ou en complément permettre le stockage de l'énergie électrique. Dans tous les cas, il est branché sur la ligne électrique via une unité de contrôle de freinage 14, ladite unité de contrôle de freinage étant de préférence activée lorsque l'accélérateur CA est par exemple sous un seuil prédéterminé. De cette façon, l'unité de pilotage 3 envoie alors au ou aux moteurs électriques une consigne de couple freineur $CC_{consigne} = CC_f$. Le seuil prédéterminé peut être constant et nul (pédale d'accélérateur relevée). Il est intéressant que le seuil prédéterminé de la commande d'accélérateur CA soit proportionnel à la vitesse du véhicule.

Le principe de pilotage d'une chaîne de traction exposé jusqu'ici convient à la majorité des configurations de véhicule. Mais comme déjà mentionné, il existe des configurations de véhicule particulières où dans certains cas eux aussi particuliers d'utilisation, on doit faire face à une importante demande de puissance par des autres organes du véhicule alors que le moteur thermique n'est pas en charge. Cela pourrait être le cas d'un véhicule à direction assistée électriquement ou d'un véhicule à suspension active électrique, dans tous ces cas le véhicule étant dépourvu ou insuffisamment pourvu d'accumulateur stockant de l'énergie électrique. On aura alors avantage à prévoir que, dans ces phases, la régulation fonctionne comme indiqué ci-dessous.

Dans ces cas, il se peut que la consigne de puissance thermique $P_{th/consigne}$ calculée à partir de la commande d'accélérateur CA ne soit pas suffisante pour satisfaire la demande de puissance des consommateurs auxiliaires évoqués ci-dessus. La pédale d'accélérateur est faiblement enfoncée ou même totalement relâchée. Dans ces cas, le couple de traction et donc la puissance à fournir pour la traction sont nuls, voire négatifs dans une phase de freinage.

Il convient de prévoir deux modes de fonctionnement pour le calcul de la valeur de consigne $PP_{consigne}$ pour l'actionneur 15 : le mode normal exposé ci-dessus (dans lequel le bloc de calcul 30 détermine la valeur de consigne $PP_{consigne}$ pour l'actionneur 15 à partir de la courbe X) et un mode que l'on pourrait qualifier de service des auxiliaires. Dans ce cas, lorsque la pédale d'accélérateur est totalement relâchée, le bloc de calcul 30 détermine la valeur de consigne $PP_{consigne}$ pour l'actionneur 15 de manière à réguler le régime du moteur thermique à un seuil minimal lui permettant de délivrer une puissance maximale de l'ordre de la puissance de crête qu'est susceptible d'absorber, dans le cas le plus pénalisant, le ou les organes auxiliaires en cause.

Il existe un deuxième cas pour lequel il est avantageux de prévoir un troisième mode de fonctionnement spécifique : c'est la manoeuvre dite de kick down, par laquelle le conducteur exprime une demande prioritaire de couple de traction maximal. Dans ce cas, si le véhicule est en dessous de la vitesse de transition $V_t$, l'organe limitant est le ou les moteurs de tractions, qui atteignent leur couple maximal à un niveau de puissance absorbée inférieur à la puissance thermique qu'est capable de délivrer le moteur thermique. On ne peut donc empêcher avec certitude l'emballement du moteur thermique en régulant son régime par la charge qu'apportent le ou les moteurs de traction. Dès lors, en mode de fonctionnement dit de « kick down », le bloc de calcul 30 détermine la valeur de consigne $PP_{consigne}$ pour l'actionneur 15 de manière à réguler le régime du moteur thermique à sa valeur de consigne $R_{th/consigne}$.

Il est bien entendu que l'utilisation des deux modes de fonctionnement décrits ci-dessus, qui font déroger fugitivement au principe de base de la régulation de la chaîne de traction exposé plus haut, de même que tout autre mode de fonctionnement que l'on adopterait fugitivement pour répondre à un objectif particulier et temporaire, doivent être considérés comme dans le champ de l'invention dès lors qu'il existe un mode de fonctionnement où l'on respecte les caractéristiques énoncées dans les revendications.

**Revendications**

1. Chaîne de traction pour véhicule hybride série comportant :

   - un moteur thermique (10) entraînant un alternateur (11),
   - au moins un moteur électrique de traction (21) connecté à l'alternateur par un redresseur (13), par une ligne électrique (12) et un onduleur (22), l'onduleur permettant de faire fonctionner le ou les moteurs électriques de traction à un couple de consigne ($CC_{consigne}$), la ligne électrique permettant le transfert d'une puissance électrique de traction,
   - un accélérateur (CA) à disposition du conducteur du véhicule ;
   - un actionneur (15) agissant sur le moteur thermique ;
   - une unité de pilotage (3) de la chaîne de traction chargée d'une modélisation du fonctionnement du moteur thermique et chargée d'un programme permettant d'obtenir, à partir de la position de l'accélérateur, une paire ($R_{th/consigne}$, $PP_{consigne}$) de valeurs de consigne pour le régime ($R_{th}$) de rotation du moteur thermique et pour la position (PP) de l'actionneur (15), ladite unité de pilotage permettant de :

      • piloter la position dudit actionneur sur la base de ladite valeur de consigne ($PP_{consigne}$) pour la position de l'actionneur, **caractérisé en ce que** ladite unité de pilotage
      • par un calcul itératif, à chaque itération, calcule un couple de consigne ($CC_{consigne}$) pour le ou les moteurs électriques de traction en fonction de l'écart entre le régime mesuré ($R_{th}$) et la valeur de consigne ($R_{th/consigne}$) pour le régime de rotation du moteur thermique de façon à respecter ledit régime de consigne ($R_{th/consigne}$).

2. Chaîne de traction selon la revendication 1 dans laquelle ladite modélisation comporte au moins une première équation donnant le régime $R_{th}$ en fonction de la puissance thermique $P_{th}$ disponible à l'arbre de sortie du moteur thermique et au moins une deuxième équation donnant la position de l'actionneur PP en fonction du régime $R_{th}$, et dans laquelle ledit programme permet de traduire la position effective de l'accélérateur CA en consigne de puissance thermique $P_{tn/consigne}$ puis de traduire la consigne de puissance thermique $P_{th/consigne}$ en consigne de régime $R_{th/consigne}$, puis de traduire la consigne de régime en consigne de position d'actionneur $PP_{consigne}$.

3. Chaîne de traction selon la revendication 1 dans laquelle ladite modélisation comporte au moins une première équation donnant le régime $R_{th}$ en fonction de la puissance thermique $P_{th}$ disponible à l'arbre de sortie du moteur thermique et au moins une deuxième équation donnant la position d'actionneur PP en fonction de la puissance thermique $P_{th}$, et dans laquelle ledit programme permet de traduire la position de l'accélérateur en consigne de puissance thermique $P_{th/consigne}$, puis de traduire la consigne de puissance thermique $P_{th/consigne}$ en consigne de régime $R_{th/consigne}$, et de traduire la consigne de puissance thermique $P_{th/consigne}$ en consigne de position d'actionneur $PP_{consigne}$.

4. Chaîne de traction selon la revendication 2 ou 3 dans laquelle lesdites première et deuxième équations sont toutes deux représentatives d'un fonctionnement du moteur thermique à consommation spécifique minimale de carburant.

5. Chaîne de traction selon la revendication 2 ou 3 dans laquelle lesdites première et deuxième équations sont toutes deux représentatives d'un fonctionnement du moteur thermique à moindre émission de polluants.

6. Chaîne de traction selon l'une des revendications 1 à 5, comportant en outre un dispositif susceptible d'absorber de l'énergie électrique, branché sur ladite ligne électrique via une unité de contrôle de freinage (14) et dans laquelle ladite unité de contrôle de freinage est activée lorsque l'accélérateur CA est sous un seuil prédéterminé, de façon à commander à l'unité de pilotage l'envoi au ou aux moteurs électriques d'une consigne de couple freineur ($CC_{consigne}$) = $CC_f$.

7. Chaîne de traction selon la revendication 6, dans laquelle ledit seuil prédéterminé de la commande d'accélérateur CA est proportionnel à la vitesse du véhicule.

8. Chaîne de traction selon la revendication 1 dans laquelle ledit programme permet de déterminer un seuil dynamique minimal de régime $R_{th/consigne/min}$ pour la valeur de consigne du régime de sorte que la tension délivrée par l'alternateur (11) et le redresseur (13) sur la ligne électrique (12) soit supérieure ou égale à la tension minimale d'alimentation du ou des moteurs électriques de traction (21), ledit seuil dynamique minimal tenant compte de la vitesse du véhicule, du couple de consigne $CC_{consigne}$ et de la consigne de puissance thermique $P_{th/consigne}$.

9. Chaîne de traction selon la revendication 1 dans laquelle ladite unité de pilotage comporte un programme permettant de calculer une valeur anticipée $CC_A$ du couple de consigne du ou des moteurs électriques de traction, et de délivrer une consigne de couple $CC_{consigne}$ au ou aux moteurs électriques de traction égale à la une somme $CC_{consigne} = CC_A + CC_R$.

10. Chaîne de traction selon la revendication 2 dans laquelle ledit programme permettant de traduire la position de l'accélérateur en consigne de puissance thermique $P_{th/consigne}$ détermine, à partir de la position de l'accélérateur, un pourcentage « x% » d'une puissance thermique maximale $P_{th/max}$ absorbable par le véhicule, et détermine ladite puissance thermique maximale $P_{th/max}$ à partir de la vitesse du véhicule.

11. Chaîne de traction selon la revendication 3 dans laquelle ledit programme permettant de traduire la position de l'accélérateur en consigne de puissance thermique $P_{th/consigne}$ détermine, à partir de la position de l'accélérateur, un pourcentage « x% » d'une puissance thermique maximale $P_{th/max}$ absorbable par le véhicule, et détermine ladite puissance thermique maximale $P_{th/max}$ à partir de la vitesse du véhicule.

**Claims**

1. Drivetrain for a series hybrid vehicle, comprising:

   - a combustion engine (10) driving an alternator (11) ,
   - at least one electric drive motor (21) connected to the alternator by a rectifier (13), by an electric line (12) and an inverter (22), the inverter allowing the electric drive motor or motors to operate at a setpoint torque ($CC_{consigne}$, the electric line permitting the transfer of an electric drive power,
   - an accelerator (CA) available to the driver of the vehicle;
   - an actuator (15) acting on the combustion engine;
   - a drivetrain management unit (3) loaded with a model of the operation of the combustion engine and loaded with a program which, from the position of the accelerator, is able to determine a pair ($R_{th/consigner}$, $PP_{consigne}$) of setpoint values for the rotational speed ($R_{th}$) of the combustion engine and for the position (PP) of the actuator (15), the said management unit being able to:

     • govern the position of the said actuator on the basis of the said setpoint value ($PP_{consigne}$) for the position of the actuator, **characterized in that** the said management unit
     • through an iterative calculation, on each iteration, calculates a setpoint torque ($CC_{consigne}$) for the electric drive motor or motors on the basis of the discrepancy between the measured speed ($R_{th}$) and the setpoint value ($R_{th/consigne}$) for the rotational speed of the combustion engine so as to comply with the said setpoint speed ($R_{th/consigne}$).

2. Drivetrain according to Claim 1, in which the said model comprises at least a first equation giving the speed $R_{th}$ as a function of the thermal power $P_{th}$ available on the output shaft of the combustion engine and at least a second equation giving the position of the actuator PP as a function of the speed $R_{th}$, and in which the said program is able to convert the actual position of the accelerator CA into a thermal power setpoint $P_{th/consigne}$ then to convert the thermal power setpoint $P_{th/consigne}$ into a speed setpoint $R_{th/consigne}$, then to convert the speed setpoint into an actuator position setpoint $PP_{consigne}$.

3. Drivetrain according to Claim 1, in which the said model comprises at least a first equation giving the speed $R_{th}$ as a function of the thermal power $P_{th}$ available on the output shaft of the combustion engine and at least a second equation giving the actuator position PP as a function of thermal power $P_{th}$, and in which the said program is able to convert the position of the accelerator into a thermal power setpoint $P_{th/consigne}$, then to convert the thermal power setpoint $P_{th/consigne}$ into a speed setpoint $R_{th/consigne}$, and to convert the thermal power setpoint $P_{th/consigne}$ into an actuator position setpoint $PP_{consigne}$.

4. Drivetrain according to Claim 2 or 3, in which the said first and second equations are both representative of combustion engine operation on minimal specific fuel consumption.

5. Drivetrain according to Claim 2 or 3, in which the said first and second equations are both representative of combustion engine operation on minimum pollutant emissions.

6. Drivetrain according to one of Claims 1 to 5, further comprising a device capable of absorbing electrical energy, connected to the said electric line via a brake control unit (14), and in which the said brake control unit is activated when the accelerator CA is below a predetermined threshold, so as to instruct the management unit to send a braking torque setpoint value $CC_{consigne} = CC_f$ to the electric motor or motors.

7. Drivetrain according to Claim 6, in which the said predetermined threshold for the accelerator control CA is proportional to the speed of the vehicle.

8. Drivetrain according to Claim 1, in which the said program is able to determine a minimum dynamic speed threshold $R_{th/consigne/min}$ for the speed setpoint value such that the voltage delivered by the alternator (11) and the rectifier (13) on the electric line (12) is greater than or equal to the minimum power supply voltage for the electric drive motor or motors (21), the said minimum dynamic threshold taking account of the speed of the vehicle, of the setpoint torque $CC_{consigne}$ and of the thermal power setpoint $P_{th/consigne}$.

9. Drivetrain according to Claim 1, in which the said management unit contains a program able to calculate an anticipated value $CC_A$ of the setpoint torque of the electric drive motor or motors, and to deliver to the electric drive motor or motors a torque setpoint $CC_{consigne}$ equal to the Sum $CC_{consigne} = CC_A + CC_R$.

10. Drivetrain according to Claim 2, in which the said program able to convert the position of the accelerator into a thermal power setpoint $P_{th/consigne}$ determines, from the position of the accelerator, a percentage "x%" of a maximum thermal power $P_{th/max}$ that can be absorbed by the vehicle, and determines the said maximum thermal power $P_{th/max}$ on the basis of the speed of the vehicle.

11. Drivetrain according to Claim 3, in which the said program able to convert the position of the accelerator into a thermal power setpoint $P_{th/consigne}$ determines, from the position of the accelerator, a percentage "x%" of a maximum thermal power $P_{th/max}$ that can be absorbed by the vehicle, and determines the said maximum thermal power $P_{th/max}$ on the basis of the speed of the vehicle.

**Patentansprüche**

1. Antriebsstrang für ein serielles Hybridfahrzeug, der aufweist:

- einen Wärmekraftmotor (10), der einen Generator (11) antreibt,
- mindestens einen elektrischen Antriebsmotor (21), der mit dem Generator über einen Gleichrichter (13), über eine elektrische Leitung (12) und einen Wechselrichter (22) verbunden ist, wobei der Wechselrichter es ermöglicht, den oder die elektrischen Antriebsmotoren mit einem Solldrehmoment ($CC_{Sollwert}$) arbeiten zu lassen, während die elektrische Leitung die Übertragung einer elektrischen Antriebsleistung erlaubt,
- ein dem Fahrer des Fahrzeugs zur Verfügung stehendes Gaspedal (CA);
- ein Stellglied (15), das auf den Wärmekraftmotor einwirkt;
- eine Steuereinheit (3) des Antriebsstrangs, in die eine Modellisierung des Betriebs des Wärmekraftmotors geladen ist, und in die ein Programm geladen ist, das es ermöglicht, ausgehend von der Stellung des Gaspedals ein Paar ($R_{th/Sollwert}$, $PP_{Sollwert}$) von Sollwerten für die Drehzahl ($R_{th}$) des Wärmekraftmotors und für die Stellung (PP) des Stellglieds (15) zu erhalten, wobei die Steuereinheit es ermöglicht:

   • die Stellung des Stellglieds auf der Basis des Sollwerts ($PP_{Sollwert}$) für die Stellung des Stellglieds zu steuern,
   **dadurch gekennzeichnet, dass** die Steuereinheit
   • durch eine iterative Berechnung bei jeder Iteration ein Solldrehmoment ($CC_{Sollwert}$) für den oder die elektrischen Antriebsmotoren in Abhängigkeit von der Abweichung zwischen der gemessenen Drehzahl ($R_{th}$) und dem Sollwert ($R_{th/Sollwert}$) für die Drehzahl des Wärmekraftmotors berechnet, um die Solldrehzahl ($R_{th/somwert}$) einzuhalten.

2. Antriebsstrang nach Anspruch 1, bei dem die Modellisierung mindestens eine erste Gleichung, die die Drehzahl $R_{th}$ in Abhängigkeit von der Wärmeleistung $P_{th}$ ergibt, die an der Abtriebswelle des Wärmekraftmotors verfügbar ist, und mindestens eine zweite Gleichung aufweist, die die Stellung des Stellglieds PP in Abhängigkeit von der Drehzahl $R_{th}$ ergibt, und bei dem das Programm es ermöglicht, die effektive Stellung des Gaspedals CA in einen Wärmeleistungssollwert $P_{th/Sollwert}$ zu übersetzen, dann den Wärmeleistungssollwert $P_{th/sollwert}$ in einen Drehzahlsollwert $R_{th/sollwert}$ zu übersetzen, dann den Drehzahlsollwert in einen Stellglied-Stellungssollwert $PP_{Sollwert}$ zu übersetzen.

3. Antriebsstrang nach Anspruch 1, bei dem die Modellisierung mindestens eine erste Gleichung, die die Drehzahl $R_{th}$ in Abhängigkeit von der Wärmeleistung $P_{th}$ ergibt, die an der Abtriebswelle des Wärmekraftmotors verfügbar ist, und mindestens eine zweite Gleichung aufweist, die die Stellung des Stellglieds PP in Abhängigkeit von der Wärmeleistung $P_{th}$ ergibt, und bei dem das Programm es ermöglicht, die Stellung des Gaspedals in einen Wärmeleistungssollwert $P_{th/Sollwert}$ zu übersetzen, dann den Wärmeleistungssollwert $P_{th/Sollwert}$ in einen Drehzahlsollwert $R_{th/sollwert}$ zu übersetzen, und den Wärmeleistungssollwert $P_{th/sollwert}$ in einen Stellglied-Stellungssollwert $PP_{sollwert}$ zu übersetzen.

4. Antriebsstrang nach Anspruch 2 oder 3, bei dem die erste und die zweite Gleichung beide für einen Betrieb des Wärmekraftmotors mit spezifischem minimalem Kraftstoffverbrauch repräsentativ sind.

5. Antriebsstrang nach Anspruch 2 oder 3, bei dem die erste und die zweite Gleichung beide für einen Betrieb des Wärmekraftmotors mit geringerem Schadstoffausstoß repräsentativ sind.

6. Antriebsstrang nach einem der Ansprüche 1 bis 5, der weiter eine Vorrichtung aufweist, die elektrische Energie absorbieren kann, an die elektrische Leitung über eine Bremskontrolleinheit (14) angeschlossen ist, und bei dem die Bremskontrolleinheit aktiviert wird, wenn das Gaspedal CA unter einer vorbestimmten Schwelle ist, um der Steuereinheit das Senden eines Bremsdrehmoment-Sollwerts $CC_{sollwert} = CC_f$ an den oder die Elektromotoren zu befehlen.

7. Antriebsstrang nach Anspruch 6, bei dem die vorbestimmte Schwelle der Gaspedalsteuerung CA proportional zur Geschwindigkeit des Fahrzeugs ist.

8. Antriebsstrang nach Anspruch 1, bei dem das Programm es ermöglicht, eine dynamische Mindestdrehzahlschwelle $R_{th/Sollwert/min}$ für den Sollwert der Drehzahl zu bestimmen, so dass die vom Generator (11) und vom Gleichrichter (13) auf der elektrischen Leitung (12) gelieferte Spannung größer als die oder gleich der Mindestspeisespannung des oder der elektrischen Antriebsmotoren (21) ist, wobei die dynamische Mindestschwelle die Geschwindigkeit des Fahrzeugs, das Solldrehmoment $CC_{Sollwert}$ und den Wärmeleistungssollwert $P_{th/Sollwert}$ berücksichtigt.

9. Antriebsstrang nach Anspruch 1, bei dem die Steuereinheit ein Programm aufweist, das es ermöglicht, einen voraussichtlichen Wert $CC_A$ des Solldrehmoments des oder der elektrischen Antriebsmotoren zu berechnen und einen Drehmomentsollwert $CC_{Sollwert}$ gleich der Summe $CC_{sollwert} = CC_A + CC_R$ an den oder die elektrischen Antriebsmotoren zu liefern.

10. Antriebsstrang nach Anspruch 2, bei dem das Programm, das es ermöglicht, die Stellung des Gaspedals in einen Wärmeleistungssollwert $P_{th/Sollwert}$ zu übersetzen, ausgehend von der Stellung des Gaspedals einen vom Fahrzeug absorbierbaren Prozentsatz "x%" einer maximalen Wärmeleistung $P_{th/max}$ bestimmt, und die maximale Wärmeleistung $P_{th/max}$ ausgehend von der Geschwindigkeit des Fahrzeugs bestimmt.

11. Antriebsstrang nach Anspruch 3, bei dem das Programm, das es ermöglicht, die Stellung des Gaspedals in einen Wärmeleistungssollwert $P_{th/sollwert}$ zu übersetzen, ausgehend von der Stellung des Gaspedals einen vom Fahrzeug absorbierbaren Prozentsatz "x%" einer maximalen Wärmeleistung $P_{th/max}$ bestimmt, und die maximale Wärmeleistung $P_{th/max}$ ausgehend von der Geschwindigkeit des Fahrzeugs bestimmt.

Fig. 1

Fig. 2

$P_{th}$

$P_{traction}$

$P_{auxiliaires}$

Pertes

Fig. 3

$P_{th}$

$P_{freinage}$

$P_{auxiliaires}$

Pertes

Fig. 9

Fig. 4

Fig. 5

$P_{th}$ (kW)

iso-ouverture papillon [%]

Courbe Y

ouverture papillon
100 %

P3

P2

P1

P0

$R_{th}$ (tr/min)

Fig. 6

PP (%)

P7

Courbe X

P6

P5

P4

$R_{th}$ (tr/min)

Fig. 7

16

Fig. 8

EP 1 428 712 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1241043 A
- EP 556942 A